# EUROPEAN PATENT APPLICATION

(11) **EP 2 051 063 A2**
(43) Date of publication of application: **22.04.2009**
(21) Application number: 08018162.1
(22) Date of filing: 16.10.2008
(51) Int. Cl.: G01N 21/64

(54) **Fluorescence sensor and method for producing thin metal film with apertures to be used by the fluorescence sensor**

(30) Priority: 17.10.2007 JP 2007270283
(71) Applicant: FUJIFILM Corporation, Minato-ku Tokyo (JP)
(72) Inventor: Ohtsuka, Hisashi, Ashigarakami-gun Kanagawa-ken (JP); Fujimoto, Kiyoshi, Ashigarakami-gun Kanagawa-ken (JP)
(74) Representative: Höhfeld, Jochen

(57) **Abstract**

To provide a low cost fluorescence sensor which is capable of highly sensitive fluorescence detection that employs a simple optical system.
An excitation light beam (9) is emitted from a light source (8). The excitation light beam (9) propagates through a substrate (6) and enters an interface between the substrate (6) and a thin metal film (24) having fine apertures (24a) with diameters less than or equal to the wavelength of the excitation light beam (9), provided on the surface of the substrate (6) opposite that on which the excitation light beam (9) is incident. Near field light (23) is generated at the fine apertures (24a). Fluorescent labels (5), included in a sample (1) which is supplied to contact the thin metal film (24), are excited by the near field light (23) and/or surface plasmon on the thin metal film (24) induced by the near field light (23). The fluorescence emitted from the fluorescent labels (5) is detected by a photodetector (10).

## Description

### BACKGROUND OF THE INVENTION

### Field of the Invention

The present invention is related to a fluorescence sensor that detects specific substances within samples by fluorometry, and a method for producing a finely apertured thin metal film to be used by the fluorescence sensor. Particularly, the present invention is related to a fluorescence sensor that utilizes near field light, and a method for producing a finely apertured thin metal film that employs an immersion adsorption method.

### Description of the Related Art

Fluorometry is conventionally used for biological measurements and the like, as an easy and highly sensitive measuring method. In fluorometry, a sample, which is considered to contain a detection target substance that emits fluorescence when excited by light having a specific wavelength, is irradiated with an excitation light beam of the aforementioned specific wavelength. The presence of the detection target substance can be confirmed by detecting the fluorescence due to the excitation. In the case that the detection target substance is not a fluorescent substance, a substance labeled by a fluorescent substance that specifically bonds with the detection target substance is caused to contact the sample. Thereafter, fluorescence is detected in the same manner as described above, thereby confirming the presence of the bond, that is, the detection target substance.

With recent advances in the performance of photodetectors, such as cooled CCD's, fluorometry has become indispensable in biological research. In addition, fluorescent pigments having fluorescence quantum yields that exceed 0.2, which is the standard for practical use, such as FITC (fluorescence: 525nm, fluorescence quantum yield: 0.6) and Cy5 (fluorescence: 680nm, fluorescence quantum yield: 0.3) have been developed as fluorescent labeling materials and are being widely used.

U.S. Patent Application Publication No.20080074671 discloses a sensor that amplifies fluorescence signals employing the electric field amplification effect of surface plasmon. By using the method employed by this sensor, detection at high sensitivities is enabled to the order of less than 1pM. However, complex optical systems employing prism substrates (hereinafter, referred to as "prism optical systems") are generally required to excite surface plasmon. Therefore, the sensor apparatus becomes large and costs become high.

Japanese Unexamined Patent Publication No. 2008-051512 discloses a sensor that enables fluorometry employing a simple optical system that does not utilize a prism optical system. This sensor utilizes a finely apertured thin film having apertures with diameters of approximately 200nm to generate near field light. Thereby, a low noise fluorometry system with levels of light dispersion noise that substantially can be ignored is realized at low cost. However, greater improvements in S/N ratios are desired, and it is necessary not only to decrease noise, but to increase the intensity of fluorescence.

### SUMMARY OF THE INVENTION

The present invention has been developed in view of the foregoing circumstances. It is an object of the present invention to provide a low cost fluorescence sensor which is capable of highly sensitive detection that employs a simple optical system and enables measurements with high S/N ratios.

It is a further object of the present invention to provide a method for producing a finely apertured thin metal film to be utilized in the fluorescence sensor, that enables production of a thin film having favorable close contact properties and fine apertures having favorable uniformity.

A first fluorescence sensor of the present invention comprises:
a light source, for emitting an excitation light beam;
a substrate formed of a material that transmits the excitation light beam, provided at a position that receives the excitation light beam;
a detection section that includes a finely apertured thin metal film, formed on a surface of substrate other than the surface onto which the excitation light beam is incident;
a sample supplying section, for supplying samples containing fluorescently labeled detection target substances such that the samples contact the detection section; and
a photodetector for detecting fluorescence from the fluorescent labels;
the fluorescence sensor being configured such that the excitation light beam enters the interface between the substrate and the finely apertured thin metal film of the detection section;
the fluorescent labels are excited by at least one of: near field light generated at the fine apertures of the finely apertured thin metal film and surface plasmon on the finely apertured thin metal film induced by the near field light; and
the fluorescence emitted from the fluorescent labels is detected by the photodetector.

A second fluorescence sensor of the present invention comprises:
a light source, for emitting an excitation light beam;
a substrate formed of a material that transmits the excitation light beam, provided at a position that receives the excitation light beam;
a detection section that includes a finely apertured thin metal film, formed on a surface of substrate other than the surface onto which the excitation light beam is incident;
a specific binding substance immobilized on the surface of the detection section;
a sample supplying section, for supplying samples containing fluorescently labeled detection target substances such that the samples contact the detection section; and
a photodetector for detecting fluorescence from the fluorescent labels;
the fluorescence sensor being configured such that the excitation light beam enters the interface between the substrate and the finely apertured thin metal film of the detection section;
the fluorescent labels are excited by at least one of: near field light generated at the fine apertures of the finely apertured thin metal film and surface plasmon on the finely apertured thin metal film induced by the near field light; and
the fluorescence emitted from the fluorescent labels is detected by the photodetector.

Note that in the present invention, a "finely apertured thin film" refers to a thin film with fine apertures that have diameters which are less than or equal to the wavelength of the excitation light beam. The "finely apertured thin metal film" refers to such thin films having metal as the material thereof. The "diameters" of the fine apertures refer to the diameters of circles having areas equivalent to the areas of the openings of the apertures.

The "detection section" is a region of the surface of the substrate on which the finely apertured thin metal film is provided. The fluorescent labels of the detection target substance within the sample, which is caused to contact the detection section, are excited by at least one of: near field light generated at the fine apertures of the finely apertured thin metal film and surface plasmon on the finely apertured thin metal film induced by the near field light. The detection section enables optical detection of the fluorescence generated by the fluorescent labels when they are excited.

The "specific binding substance" refers to substances that bind to specific substances, such as chelators with respect to proteins, and antigens with respect to antibodies.

The specific binding substance is provided to enable two types of fluorometry, as will be described below. A first type of fluorometry is the "sandwich method". In the sandwich method, the detection target substance is an antigen, for example. In this case, the specific binding substance is a primary antibody to the antigen. The antigens are caused to bind with the primary antibodies, which are immobilized on the substrate. Thereafter, the antigens are labeled with fluorescent labels via secondary antibodies (linkers which are labeled with fluorescent labels). The fluorescence from the fluorescent labels, that is, from locations at which the antigens are present, are detected. A second type of fluorometry is the "competitive method". In the competitive method, antigens and secondary antibodies are caused to bind with primary antibodies, which are immobilized on the substrate. Then, the fluorescence from the fluorescent labels, which are bound to the secondary antibodies immobilized on the substrate is detected. That is, fluorescence is detected from locations at which the antigens are not present. These two types of fluorometry can be executed not only with respect to antigen/antibody reactions, but with respect to linkers labeled by fluorescent labels and specific binding substances, which are selected according to detection conditions.

In these cases, the locations at which the specific binding substance is immobilized is the exposed surface of the detection section. That is, the specific binding substance is immobilizedonto the surface of the finely apertured thin metal film and/or the surfaces of the substrate, which are exposed through the fine apertures of the finely apertured thin metal film. It is particularly desirable for the specific binding substance to be immobilized in the vicinities of the fine apertures of the finely apertured thin metal film.

It is desirable for a non flexible film of a hydrophobic material to be formed at a film thickness within a range of 10 to 100nm on the finely apertured metal film of the detection section. In this case, it is desirable for the non flexible film to be constituted by a polymer material. Here, the term "non flexible" refers to a degree of rigidity that does not result in deformation such that the film thickness of the non flexible film changes during normal use of the fluorescence sensor.

It is desirable for the diameters of the fine apertures to be within a range from 5nm to 200nm.

It is desirable for the percentage of open areas of the finely apertured thin metal film to be within a range of 5% to 50%.

Further, a method for producing the finely apertured thin metal film to be used in the fluorescence sensor of the present invention comprises the steps of:
(A) preparing a substrate having static electric charges on the surface thereof;
(B) producing a dispersion liquid containing fine particles which are charged with static electric charges of a polarity opposite the static electric charges of the substrate;
(C) immersing the substrate in the dispersion liquid to cause the fine particles to be adsorbed onto the surface of the substrate;
(D) drying the surface of the substrate, onto which the fine particles are adsorbed;
(E) depositing a metal material comprising constituent atoms of the finely apertured thin metal film to be formed onto the surface of the substrate, onto which the fine particles are adsorbed; and
(F) removing the fine particles, by adhesively attaching an adhesive sheet onto the fine particles, which are adsorbed on the surface of the substrate, from above, then peeling the adhesive sheet off;
steps (C) , (D) , (E), and (F) being executed in this order after steps (A) and (B) are executed.

It is desirable for the fine particles to be polymer particles. It is desirable for the method for producing the finely apertured thin metal film to further comprise a step of: (G) heating the fine particles, which are adsorbed onto the surface of the substrate, in a solvent; wherein step (G) is executed between steps (C) and step (D). It is desirable for the dispersion liquid to contain a water miscible organic solvent. Here, "water miscible" refers to a property that enables the water miscible organic solvent to mix limitlessly with water. Further, it is desirable for the method for producing the fnely apertured thin metal film to further comprise a step of: (H) immersing the substrate, onto which the fine particles are adsorbed, within an organic solvent having lower surface tension than a residual solvent, and substituting the residual solvent with the organic solvent; wherein step (H) is executed between steps (C) and (D). Step (H) may be executed in combination with step (G). In this case, step (G) is executed before step (H).

Note that it is desirable for the adhesive strength of the adhesive sheet to be within a range of 0.1N/cm to 5N/cm.

The fluorescence sensor of the present invention employs the finely apertured thin metal film. Therefore, near field light can be generated without using a prism optical system, if the excitation light beam is caused to enter the interface between the finely apertured thin metal film and the substrate through the substrate. Accordingly, it is not necessary to form the substrate into a specialized shape, and substrates of simple shapes, such as planar substrates, may be used. At the same time, the optical system is simplified.

The electric field amplifying effect of the near field light and/or surface plasmon on the thin metal film induced by the near field light generated as described above amplify the intensity of fluorescence.

The near field light only reaches regions within several hundred nanometers of the interface between the substrate and the sample. Therefore, the influence of dispersion due to impurities in the sample and unintentional fluorescence emitted from floating fluorescent labels can be eliminated. In addition, the excitation light beam and light which is scattered by impurities in the substrate (normal propagated light) cannot pass through the fine apertures of the finely apertured thin metal film. Therefore, the excitation light beam and scattered light cannot reach the photodetector, due to effects similar to those obtained when they are shielded by a thin metal film without fine apertures. For these reasons, optical noise can be reduced to a degree that it is substantially eliminated. Thereby, fluorometry which is capable of highly sensitive fluorescence detection that employs a simple optical system is enabled at low cost.

Further, the method for producing the finely apertured thin metal film of the present invention imparts complementary static electric charges to the fine particles and the substrate in the immersion adsorption method. Therefore, the particles repel each other, while interactions between the particles and the substrate are increased. Thereby, agglomeration of the fine particles can be prevented, while at the same time resistance against capillary forces that occur during drying is imparted, and uniform dispersion can be realized.

The adhesive sheet is adhesively attached to the fine particles, which are adsorbed on the surface of the substrate, from above. Because the fine particles are densely dispersed and adsorbed onto the surface of the substrate, the adhesive layer of the adhesive sheet is adhesively attached only to the upper portions of the fine particles. Thereby, the fine particles can be removed by peeling the adhesive sheet off, without damaging the thin film in the peripheries of the fine particles, that is, without damaging the structure of the finely apertured thin metal film.

As described above, a method for producing a finely apertured thin metal film that enables production of a thin film having favorable close contact properties and fine apertures having favorable uniformity is realized.

### BRIEF DESCRIPTION OF THE DRAWINGS

Figure 1 is a partial sectional view that schematically illustrates the construction of a fluorescence sensor according to a first embodiment of the present invention.
Figures 2A and 2B are diagrams that schematically illustrate a fluorescence detecting process performed by the fluorescence sensor of the first embodiment.
Figure 3 is a partial sectional view that schematically illustrates the construction of a fluorescence sensor according to a second embodiment of the present invention.
Figures 4A, 4B, 4C, 4D, and 4E are diagrams that schematically illustrate a fluorescence detecting process performed by the fluorescence sensor of the second embodiment.
Figure 5 is a diagram that illustrates an example of step (A) of a method for producing finely apertured thin metal films of the present invention.
Figure 6 is a diagram that illustrates an example of step (B) of the method for producing finely apertured thin metal films of the present invention.
Figure 7 is a diagram that illustrates an example of step (C) of the method for producing finely apertured thin metal films of the present invention.
Figure 8 is a diagram that illustrates an example of step (H) of the method for producing finely apertured thin metal films of the present invention.
Figure 9 is a diagram that illustrates an example of step (D) of the method for producing finely apertured thin metal films of the present invention.
Figure 10 is a diagram that illustrates an example of step (E) of the method for producing finely apertured thin metal films of the present invention.
Figures 11A, 11B, 11C, and 11D are diagrams that illustrate an example of step (F) of the method for producing finely apertured thin metal films of the present invention.

### BEST MODE FOR CARRYING OUT THE INVENTION

Hereinafter, embodiments of the present invention will be described with reference to the attached drawings. However, the present invention is not limited to the embodiments described below.

### Fluorescence Sensor

### <First Embodiment>

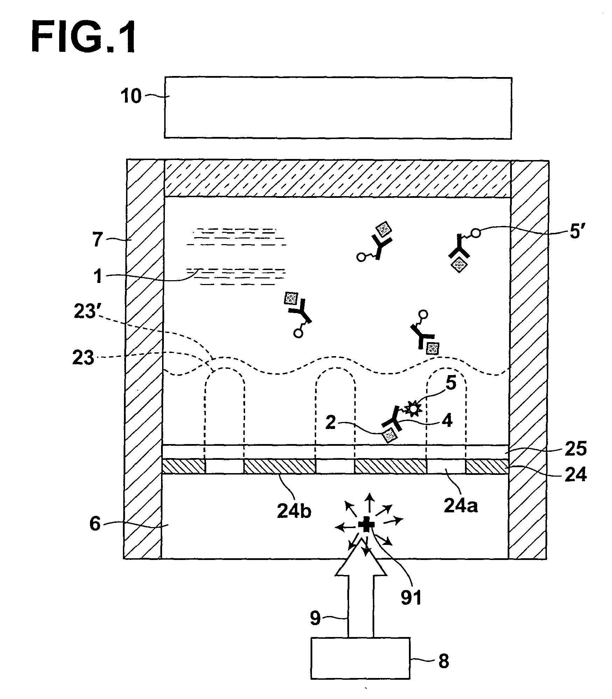

Figure 1 is a schematic side view of a fluorescence sensor according to a first embodiment of the present invention. The fluorescence sensor is employed to detect antigens 2 as detection target substances from a sample 1 that contains the antigens 2, utilizing antigen/antibody reactions. As illustrated in Figure 1, the fluorescence sensor is equipped with: a light source 8 that emits an excitation light beam 9 of a predetermined wavelength; a planar substrate 6 formed by a material that transmits the excitation light beam 9, provided to cause the excitation light beam 9 to propagate therethrough from a first side thereof; a finely apertured thin metal film 24 having fine apertures 24a with diameters less than or equal to the wavelength of the excitation light beam 9, provided on a second side of the substrate 6; a non flexible film 25 which is formed on the finely apertured thin metal film so as to cover the fine apertures 24a; a sample holding section 7 that holds the sample 1 such that the sample 1 contacts the non flexible film 25; and a photodetector 10 which is provided at a position outside the sample holding section 7 and at which light emission of fluorescent labels 5 within the sample 1 can be detected. Figure 1 also illustrates the fluorescent labels 5, and secondary antibodies 4 which are labeled by the fluorescent labels 5. The secondary antibodies 4 specifically bind with the antigens 2.

The excitation light beam 9 is not particularly limited, and may be a single wavelength light beam emitted from a laser light source or the like, or a broad spectrum light beam emitted from a white light source. The type of light beam to be employed as the excitation light beam 9 may be appropriately selected according to detection conditions.

The light source 8 is not particularly limited, and may be a laser light source. The type of light source to be employed as the light source 8 may be appropriately selected according to detection conditions. The light source 8 may be combined with moving means for emitting the excitation light beam 9 through the substrate 6 toward an interface 24b between the substrate 6 and the finely apertured thin metal film 24 from a desired direction, as appropriate. In addition, the light source 8 may be combined with a light guiding optical system constituted by mirrors, lenses, and the like, to guide the excitation light beam, as appropriate.

The substrate 6 may be formed by transparent materials such as transparent resins and glass. It is desirable for the substrate 6 to be formed by resin. In the case that the substrate 6 is be formed by resin, polymethyl methacrylate (PMMA), polycarbonate (PC), and non crystalline polyolefin (APO) that includes cycloolefin may be favorably employed.

The material of the finely apertured thin metal film 24 is not particularly limited, and may be selected appropriately according to detection conditions. However, it is desirable for Au, Ag, Pt, and the like to be employed, from the viewpoint of generation conditions for surface plasmon. The film thickness of the finely apertured thin metal film 24 is also not particularly limited, and may be selected appropriately according to detection conditions. However, it is desirable for the film thickness to be within a range from 20nm to 60nm, from the viewpoint of generation conditions for surface plasmon. The method for producing the finely apertured thin metal film 24 is not particularly limited, and may be selected appropriately according to detection conditions and materials to be utilized. However, in order to realize stable production of a thin film having favorable close contact properties and stable production of uniform fine apertures, it is desirable to employ the method for producing finely apertured thin metal film of the present invention to be described later. In this case, the finely apertured thin metal film is produced using fine particles attached to the surface of a substrate as a mask. Therefore, the diameters of the fine apertures and the percentage of open areas can be freely controlled, by adjusting the diameters of the fin particles and the density thereof within a dispersion liquid, without being limited by the size of the substrate. It is desirable for the diameters of the fine apertures 24a to be within a range from 5nm to 200nm. In this case, near field light due to leakage can be effectively generated. At the same time, an advantageous effect that the fine apertures 24a will be efficiently and positively filled with biological samples to be detected, such as antibodies and proteins, can be expected, because the sizes thereof are within a range from several nanometers to several tens of nanometers. In addition, it is desirable for the percentage of open areas of the finely apertured thin metal film 24 to be comparatively large, from the viewpoint of increasing intensity of fluorescence. However, if the percentage of open areas of the finely apertured thin metal film 24 exceeds 50%, it becomes difficult to realize both stable production of a thin film having favorable close contact properties and stable production of fine apertures having favorable uniformity. Therefore, it is desirable for the upper limit of the percentage of open areas of the finely apertured thin metal film to be 50%.

Examples of materials for the non flexible film 25 include silicon oxide and polymer materials. From the viewpoints of film forming conditions and surface processing conditions, it is desirable for polymer materials to be employed. In this case, a simple method, such as the spin coat method, may be employed to produce the non flexible film 25. The non flexible film 25 is formed by a hydrophobic material in the present invention. Therefore, molecules that cause light loss, such as metal ions and dissolved oxygen, which are present within the sample 1, are prevented from entering the interior of the non flexible film 25. Accordingly, the excitation energy of the excitation light beam 8 can be prevented from being robbed by these molecules.

As a specific material of the non flexible film 25, one that has a difference in the coefficient of linear (thermal) expansion compared to the material of the substrate 6 within a range of 35×10⁻⁶ is desirable. Such a material may be selected from among those listed in Table 1.

**TABLE 1**

| Material | Coefficient of Linear (Thermal) Expansion (×10⁻⁶) |
|---|---|
| Water | 70 |
| Polystyrene | 70 |
| PMMA | 70 |
| Polycarbonate | 60 |
| Cycloolefin (Zeonex™ 330R) | 90 |
| Cycloolefin (Zeonex™ E48R) | 60 |
| Quartz (SiO₂) | 0.6 |
| BK7 | 7.1 |
| Gold | 14 |

The reason why the difference in coefficients of linear (thermal) expansion is limited to within 35×10⁻⁶ will be described below.

To improve stability with respect to environmental changes, and particularly temperature, it is preferable for the non flexible film 25 and the substrate 6 to have similar coefficients of thermal expansion. That is, if the coefficients of thermal expansion of the two components are different to a great degree, separation or decrease in the degree of close contact becomes likely when temperature changes occur. Specifically, it is desirable for the difference between the coefficients of linear (thermal) expansion of the two components to be within a range of 35×10⁻⁶. Note that the finely apertured thin metal film 24 is provided between the non flexible film 25 and the substrate 6. When temperature changes occur, the finely apertured thin metal film 24 expands and contracts along with the non flexible film 25 above and the substrate 6 below. Therefore, the fact remains that it is preferable for the coefficients of thermal expansion of the non flexible film 25 and the substrate 6 to be similar. In consideration of the above points, in the case that the non flexible film 25 is formed by a polymer material, it is preferable to select resin as the material of the substrate 6 over glass.

Meanwhile, the film thickness of the non flexible film 25 is set to be within a range from 10nm to 100nm. The lower and upper limits of the film thickness are set to 10nm and 100nm for the following reasons. Light loss occurs in molecules of fluorescent substances which are present in the vicinity of metal, due to energy transition to the metal. The degree of energy transition is inversely proportionate to the distance between the molecules and the metal to the third power in the case that the metal is a plane which is infinitely thick. The degree of energy transition is inversely proportionate to the distance between the molecules and the metal to the fourth power in the case that the metal is a plane which is infinitely thin. The degree of energy transition is inversely proportionate to the distance between the molecules and the metal to the sixth power in the case that the metal is in the form of fine particles. It is desirable for a distance of several nm or greater, preferably 10nm or greater, to be secured between the metal and the fluorescent substance molecules in the case that the metal is a metal film. Accordingly, the lower limit of the film thickness is set to 10nm in the present invention. On the other hand, the fluorescent substance molecules are excited by near field light which leak from the surface of the metal film and which are amplified by surface plasmon. The range of travel (distance from the surface of the metal film) of near field light is at most approximately one wavelength, and it is known that the electric field intensity thereof attenuates drastically at an exponential rate corresponding to the distance from the surface of the metal film. When this relationship is calculated for visible light having a wavelength of 635nm, it can be seen that leakage of the evanescent wave occurs only for a distance approximately corresponding to the wavelength (635nm), and the electric field intensity drops drastically beyond 100nm. It is desirable for the electric field that excites the fluorescent substance molecules to be as great as possible. Therefore, it is desirable to set the distance between the surface of the metal film and the fluorescent substance molecules to be 100nm or less, to perform effective excitation. Accordingly, the upper limit of the film thickness is set to 100nm in the present invention.

In the case that the non flexible film 25 is formed by a polymer, proteins and the like which are present as detection target substances 2 may be easily non specifically adsorbed onto polymers. This is due to a hydrophobic effect caused by the polymer and the proteins being hydrophobic. In this case, the non specific adsorption of the proteins become causes for deteriorations in quantitative detection of fluorescence. Therefore, it is desirable for hydrophilic surface modifications to be provided on the surface of the non flexible film 25. The hydrophilic surface modifications may function as linkers to immobilize specific binding substances, in addition to the above function of preventing non specific adsorption.

The photodetector 10 detects extremely weak fluorescence of a specific wavelength emitted by the fluorescent labels 5. LAS-1000 plus by FUJIFILM Corp. may be employed as the photodetector 10. However, the photodetector 10 is not limited to the above, and may be selected appropriately according to detection conditions. Examples of alternative photodetectors include: CCD's; PD's (photodiodes); photoelectron multipliers; and c-MOS's.

The fluorescent labels 5 emit fluorescence of a predetermined wavelength when excited by the excitation light beam 9. The type of fluorescent label to be employed in the present invention is not limited, and may be appropriately selected according to detection conditions (particularly, the detection target substance). For example, Cy5 pigment may be employed in the case that the wavelength of the excitation light beam 9 is 650nm. In this case, the fluorescent labels 5 and the antigens 2 can be caused to specifically bind with each other using antigen/antibody reactions, by attaching the fluorescent labels 5 to monoclonal antibodies (secondary antibodies 4) or the like.

The operation of the fluorescence sensor will be described below.

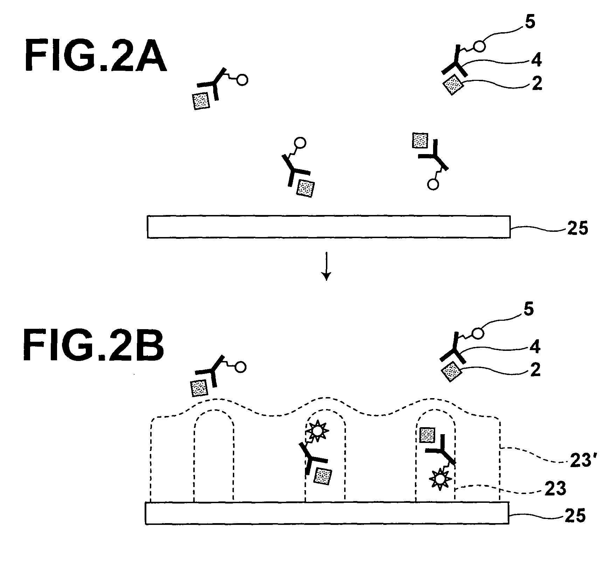

First, the sample 1 including the fluorescent labels 5 is supplied to the sample holding section 7 (Figure 2A). Thereafter, the excitation light beam 9 is emitted toward the interface 24b between the substrate 6 and the finely apertured thin metal film 24 from a direction perpendicular to the finely apertured thin metal film 24. At this time, near field light 23 leaks into the fine apertures 24a of the finely apertured thin metal film 24. The fluorescent labels 5 in the vicinities of the fine apertures 24a are excited by the near field light 23. Further, the near field light induces plasmon to be generated at the surface of the finely apertured thin metal film 24 in the vicinities of the fine apertures 24a. Therefore, the electric field amplifying effect of the plasmon amplifies the intensity of the near field light (denoted by 23' in Figure 2B). The amplified near field light 23' excites the fluorescent labels 5 which are not excitable by the near field light 23. The excited fluorescent labels 5 emit fluorescence of a predetermined wavelength, and the antigens 2 are detected by detecting the fluorescence (Figure 2B).

In the above example, the presence of the fluorescent labels 5 is actually confirmed by the detection of fluorescence. However, it is considered that the fluorescent labels 5 are bound to the antigens 2 by a preliminary process. Therefore, the presence of the antigens 2 is indirectly confirmed by confirming the presence of the fluorescent labels 5.

As described above, the fluorescence sensor of the present invention utilizes the finely apertured thin metal film 24. Therefore, the near field light 23 generated at the fine apertures 24a induces plasmon at the surface of the finely apertured thin metal film 24. The electric field amplifying effect of the plasmon generates the amplified near field light 23', and the intensity of the fluorescence emitted by the fluorescent labels 5 can be amplified. The intensity of fluorescence which is amplified by the electric field amplifying effect is greater than that in cases that finely apertured thin films which are not made of metal are utilized, that is, when only near field light is utilized, by an order of 100.

Further, light which is scattered by impurities 91 in the substrate 6 (normal propagated light) cannot pass through the fine apertures 24a of the finely apertured thin metal film 24. Therefore, the scattered light is shielded by the finely apertured thin metal film 24, and cannot reach the photodetector 10. For these reasons, optical noise can be reduced to a degree that it is substantially eliminated. Thereby, fluorometry which is capable of fluorescence detection at extremely high sensitivity can be realized.

It is not necessary for the excitation light beam 9 to be totally internally reflected at the interface 24b. Accordingly, it is not necessary to form the substrate 6 into a specialized shape, and substrates having simple shapes, such as planar substrates, may be used. At the same time, the optical system is simplified. Therefore, the fluorescence sensor can be provided at low cost.

Further, the non flexible film 25 is provided in the fluorescence sensor of the first embodiment, to prevent the fluorescent labels 5 within the sample 1 from approaching the finely apertured thin metal film 24 to a degree that would cause light loss. Therefore, the excited fluorescent labels 5 can be efficiently caused to emit light, enabling fluorescence detection at high sensitivity.

Note that the near field light 23 and the amplified near field light 23' only reaches regions within several hundred nanometers from the interface 24b. Therefore, it is considered that the percentage of fluorescent labels 5 which are excited by the near field light 23 and the amplified near field light 23' is small in the first embodiment. This is because the pairs of fluorescent labels 5 and antigens 2 are uniformly dispersed within the sample 1 due to Brownian motion, and there is a limit to the number of fluorescent labels 5 which are within the extremely short propagation distance of the near field light 23 and the amplified near field light 23'. A second embodiment of the present invention, to be described below, addresses this problem.

### <Second Embodiment>

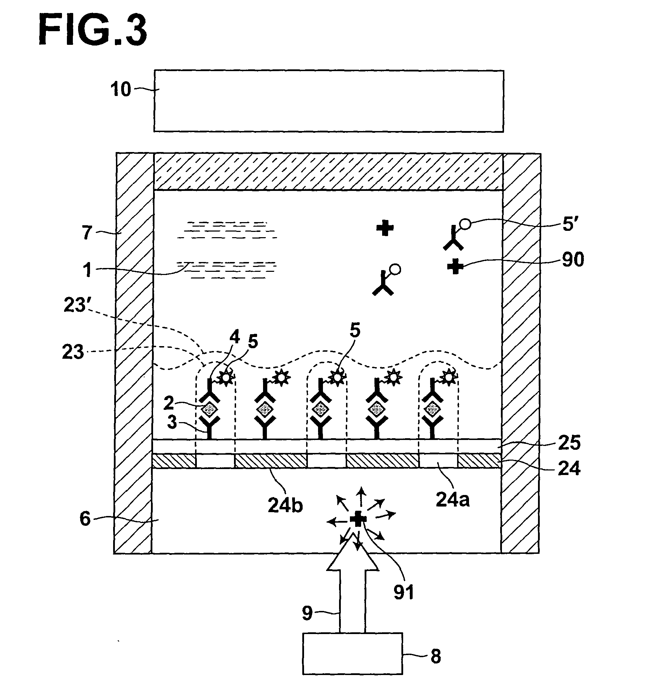

Figure 3 is a schematic side view of a fluorescence sensor according to the second embodiment of the present invention. The fluorescence sensor is employed to detect antigens 2 as detection target substances from a sample 1 that contains the antigens 2, utilizing antigen/antibody reactions. The fluorescence sensor of the second embodiment is the same as the fluorescence sensor of the first embodiment which was described with reference to Figure 1, except that a hydrophilic surface modification (not shown) is administered on the non flexible film 25, and primary antibodies 3 are immobilized on the modified hydrophilic surface of the non flexible film 25. The other components which are the same as those of the fluorescence sensor of the first embodiment will be denoted with the same reference numerals, and detailed descriptions thereof will be omitted insofar as they are not particularly necessary.

The primary antibodies 3 are not particularly limited, and may be appropriately selected according to detection conditions. For example, in the case that the antigens 2 are CRP antigens (molecular weight: 110,000 Da), monoclonal antibodies that specifically bind with the antigens 2 may be employed as the primary antibodies 3. The primary antibodies 3 may be immobilized onto the non flexible film 25, which is formed by a polymer material, by the amine coupling method via PEG's having carboxylized ends. Thereby, antigen/antibody reactions can be employed to specifically bind the antigens 2 to the detection section. The amine coupling method comprises the following three steps, for example. Note that the following example is for a case in which a 30µl cuvette/cell is employed.

### (1) Activation of -COOH Groups at the Ends of Linkers

30µl of a solution containing equal volumes of a 0.1M NHS (N-hydrooxysuccinimide) solution and a 0.4M EDC (1-ethyl-3-(3-dimethylamminopropyl) carbodiimide) solution are added to the non flexible film 25, and left still at room temperature for 30 minutes.

### (2) Immobilization of Primary Antibodies

Cleansing is performed five times with a PBS buffer (pH: 7.4). Then, 30µl of a solution containing the primary antibodies (500ug/ml) is added, and the non flexible film 25 is left still for 30 to 60 minutes at room temperature.

### (3) Blocking of Non Reacted -COOH Groups

Cleansing is performed five times with a PBS buffer (pH: 7.4) . Then, 30µl of a 1M ethanol amine solution (pH: 8.5) is added, and the non flexible film 25 is left still for 20 minutes at room temperature. Thereafter, cleansing is performed five times with a PBS buffer (pH: 7.4).

The operation of he fluorescence sensor of the second embodiment will be described below.

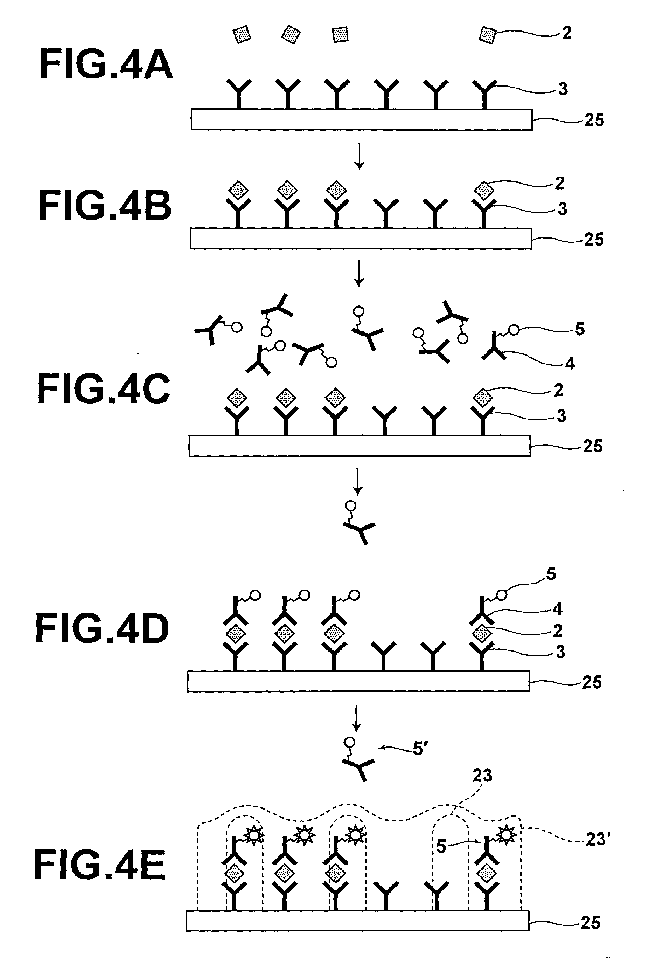

The primary antibodies 3 that specifically bind with the antigens 2 are immobilized on the non flexible film 25. The sample 1 is caused to flow within the sample holding section 7 (Figure 4A) , and the antigens 2 bind to the primary antibodies 3 and become immobilized onto the non flexible film 25 (Figure 4B). Next, the secondary antibodies 4 that specifically bind to the antigens 2 and of which at least the epitopes are different from the primary antibodies 3 are caused to flow within the sample holding section 7 (Figure 4C). The secondary antibodies 4 specifically bind to the antigens 2, which are immobilized on the primary antibodies 3, and are immobilized thereon (the sandwich method, Figure 4D).

Thereafter, the excitation light beam 9 is emitted as in the fluorescence sensor of the first embodiment, the near field light 23 and the amplified near field light 23' are generated, and the fluorescent labels 5 are excited and emit fluorescence (Figure 4E). Detection of the emitted fluorescence enables detection of the antibodies 2, and therefore advantageous effects similar to those obtained by the fluorescence sensor of the first embodiment can be obtained.

Further, the problem that large intensities of fluorescence cannot be obtained due to the near field light 23 and the amplified near field light 23' only propagating several hundreds of nanometers from the interface 24b can also be resolved by the fluorescence sensor of the second embodiment. That is, the pairs of antigens 2 and fluorescent labels 5 are collected at the detection section by using the primary antibodies. Thereby, the amount of fluorescent labels 5 which are excited by the near field light 23 and the amplified near field light 23' can be increased. Therefore, a greater intensity of fluorescence can be obtained, and as a result, highly quantitative fluorescence detection is enabled. In this case, the extremely short propagation distance of the near field light 23 and the amplified near field light 23' is effective in improving S/N ratios, because the influence of light scattering due to impurities 90 in the samples and fluorescence emissions from floating fluorescent labels 5' can be reduced.

In addition, in the case that the non flexible film 25 is formed by a polymer material, the antigens 2 (particularly proteins and the like) which are in the sample 1 may be easily non specifically adsorbed onto the non flexible film 25. In this case, the non specific adsorption of the antibodies 6 and the antigens 2 yields the same result as the specific adsorption of the antigens 2, which may cause false positive detection of the antigens 2 to occur. However, in the fluorescence sensor of the present invention, in the case that the non flexible film 25 formed by a polymer material is employed, the hydrophilic surface modifications are provided on the surface of the non flexible film 25. Accordingly, the proteins and the like are prevented from being non specifically adsorbed onto the non flexible film 25, and false positive detection is prevented.

Note that the excitation light beam 9 is emitted toward the interface 24b from a direction perpendicular to the finely apertured thin metal film 24 in the fluorescence sensors of the first and second embodiments. However, the fluorescence sensor of the present invention is not limited to such a configuration. Because the fluorescence sensor of the present invention employs the finely apertured thin metal film 24, the excitation light beam 9 will cause near field light to be generated at the fine apertures 24a when being emitted from any direction, as long as it passes through the substrate 6 toward the interface 24b. In addition, descriptions were given regarding antigen/antibody reactions. However, the fluorescence sensor is not limited to utilizing antigen/antibody reactions, and other reactions that have specific binding properties may be utilized to obtain the same advantageous results.

### Method for Producing Finely Apertured Thin Metal Films

Next, a method for producing finely apertured thin metal films according to a third embodiment of the present invention will be described.

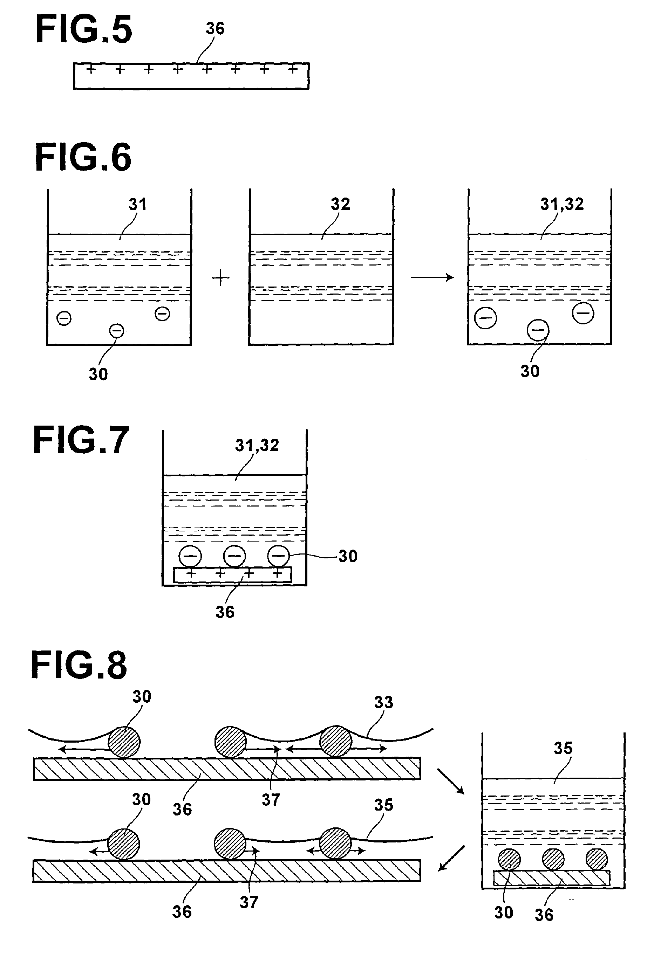

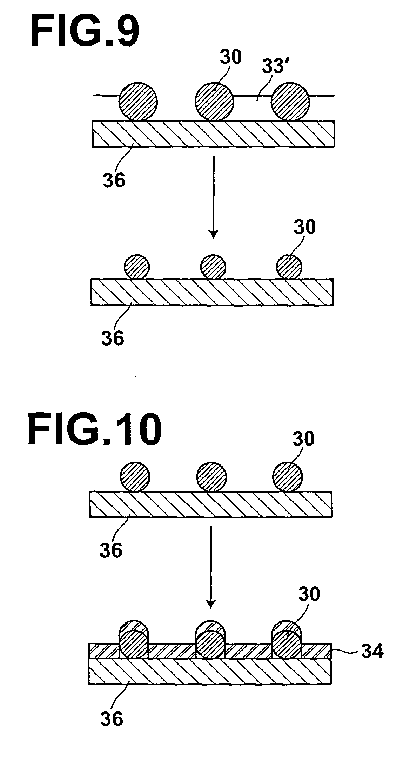

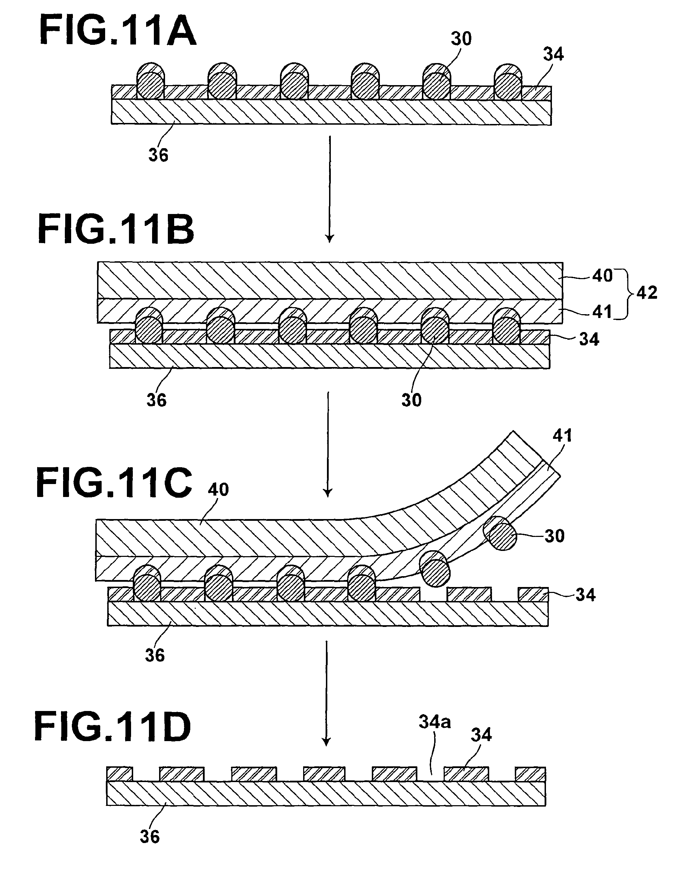

The method for producing finely apertured thin metal films of the third embodiment comprises the steps of: (A) preparing a substrate 36 having static electric charges on the surface thereof (Figure 5) ; (B) preparing fine polymer particles 30 which are charged with static electric charges of a polarity opposite the static electric charges of the substrate, and producing a dispersion liquid 31 that includes the fine polymer particles 30 and a water miscible organic solvent 32 (Figure 6); (C) immersing the substrate 36 in the dispersion liquid 31 to cause the fine polymer particles 30 to be adsorbed onto the surface of the substrate 36, then rinsing the substrate 36 with a rinsing solvent (Figure 7); (H) immersing the substrate 36, onto which the fine polymer particles 30 are adsorbed, within an organic solvent 35 having lower surface tension than a residual solvent 33 (in this case, the rinsing solvent), and substituting the residual solvent with the organic solvent 35 (Figure 8) ; (D) drying the residual solvent 33' (in this case, the substituted organic solvent 35) on the surface of the substrate 36, onto which the fine polymer particles 30 are adsorbed (Figure 9) ; (E) depositing a material comprising constituent atoms of the finely apertured thin metal film 34 to be formed onto the surface of the substrate 36, onto which the fine polymer particles 30 are adsorbed (Figure 10) ; and (F) removing the fine polymer particles 30, by adhesively attaching an adhesive sheet 42 onto the fine polymer particles 30, which are adsorbed on the surface of the substrate 36, from above, then peeling the adhesive sheet 42 off (Figure 11). The steps are executed in this order.

### <Step A>

The substrate 36 is not particularly limited as long as it is of a transparent material and has static electric charges on the surface thereof. Examples of materials for the substrate 36 include: glass; PET (polyethylene terephthalate) film; PEN (polyethylene naphthalate) film; and plastic films such as polycarbonate films. In the case that there are no static electric charges on the surface of the substrate 36, or there is an insufficient amount of static electric charges on the surface of the substrate 36, surface modifications may be administered to impart static electric charges thereto.

The hydrophilic properties, the static electric charges, the flatness and the like of the surface of the substrate 36 influence adsorption of the fine polymer particle 30 thereto, and therefore it is desirable to control these properties. Processes to be administered onto the surface of the substrate 36 are preferably selected taking these properties into consideration. Desirable preliminary processes include: a UV ozone process; and surface modifications by modifying agents such as PDDA (poly (diallyl dimethyl ammonium chloride)), poly (sodium styrene sulphonate), and poly (3,4-oxyethylene oxythiophene).

### <Step B>

The fine polymer particles 30 are dispersed within the dispersion liquid 31 in this step. Further, the water miscible organic solvent 32 is added to the dispersion liquid 31 at a constant rate, while the dispersion liquid 31 is agitated for one hour at room temperature. Thereby, the fine polymer particles 30 are impregnated with the water miscible organic solvent 32, and become swollen (Figure 6).

The material of the fine particles is not particularly limited. However, materials that have static electric charges on the surfaces thereof, or materials, to the surfaces of which static electric charges can be easily imparted, are desirable. Examples of the fine polymer particles 30 include: polystyrene particles; polymethyl methacrylate particles; and polybenzyl methacrylate particles. Polystyrene particles are preferred, because the particle sizes thereof are singly dispersed, the degree of freedom of functional groups on the surfaces thereof is high, and they are easily available. Because static electric interactions are to be utilized, it is necessary for the fine polymer particles 30 to have static electric charges of a polarity opposite that of the static electric charges on the substrate 36. In the case that the fine polymer particles 30 do not have such static electric charges, surface processing may be administered on the fine polymer particles 30 to impart such static electric charges thereto. The shapes of the fine polymer particles 30 and surface processing methods to be administered thereon are not particularly limited, and may be selected as appropriate. It is desirable for shapes and surface processing methods that suitably enable the fine polymer particles 30 to be removed after formation of the finely apertured thin metal film 34. Specifically, spheres, oval spheres, and polyhedrons are desirable as shapes of the fine polymer particles 30. Spheres are particularly preferred. Core shelling, chemical modifications, plasma processes, addition of surfactants, and addition of substituent groups (carboxyl groups, trialkyl ammonium groups, amino groups, hydroxyl groups, and sulfonic acid groups, for example) are desirable as surface processes to be administered. Further, the diameters of fine apertures 34a which are formed in the finely apertured thin metal film 34 can be controlled by the particle size of the fine polymer particles 30 (in the present specification, the term "particle size" refers to the diameter of a circle having the same area as that of the projected area of a particle). Therefore, it is desirable for particles of a size suited for desired designs to be selected. In the present invention, the particle size is preferably within a range from 5nm to 200nm. The particle size distribution of the fine polymer particles 30 is not particularly limited. However, single dispersion is desirable.

It is desirable for the dispersion liquid 31 to be a solvent that does not prevent static electric interactions between the fine polymer particles 30 and the substrate 6. It is also desirable for the dispersion liquid 31 to be a solvent in which the fine polymer particles 30 can be stably dispersed. The dispersion liquid 31 may be water or an organic solvent. However, from the viewpoints of ease in preparation and increased static electric interactions, water is preferred as the dispersion liquid 31. Appropriate surfactants may be added to improve the dispersion properties of the fine polymer particles 30. The dispersion concentration of the fine polymer particles 30 may be appropriately controlled according to the properties of the fine polymer particles 30, the properties of the substrate 36, and the density at which the fine polymer particles are intended to be provided on the substrate 36. It is desirable for the concentration of the fine polymer particles 30 within the dispersion liquid 31 to be within a range from 0.01 weight % to 10 weight %, and more preferably to be within a range from 0.1 weight % to 1 weight %.

The water miscible organic solvent 32 is used to effectively cause the fine polymer particles 30 to swell and soften. It is desirable for the water miscible organic solvent 32 to be a solvent that has an affinity with the polymer material of the fine polymer particles 30. An example of an index that indicates the affinity of polymers and organic solvents is an SP value (solubility parameter). The water miscible organic solvent 32 may be selected such that the SP value with respect to the polymer material of the fine polymer particles is low. For example, acetone or the like may be selected in the case that fine polystyrene particles are employed. In the case that the water miscible organic solvent 32 is selected in this manner, it is not necessary to execute step (G), to be described later.

### <Step C>

The fine polymer particles 30 are dispersed and adsorbed onto the substrate 36 in this step (Figure 7). Further, excess fine polymer particles 30 are washed away from the surface of the substrate 36, by rinsing the substrate 36 with the rinsing solvent.

The bar coat method, the squeegee coating method, the spin coat method, the ink jet method, the spray method, the immersion adsorption method and the like may be employed to disperse the fine polymer particles 30 onto the substrate 36. From the viewpoint of forming the finely apertured thin metal film 34 to have uniform and favorable fine apertures 34a, it is desirable to employ the immersion adsorption method. In the immersion adsorption method, the substrate is immersed in the dispersion liquid, in which the fine particles are dispersed, and the fine particles are caused to be adsorbed onto the substrate by interactions between the substrate and the particles.

It is desirable for close contact properties between the fine polymer particles 30 and the substrate 36 to be sufficiently strong so as to counter the capillary force which is generated when the residual solvent 33 dries. Therefore, the static electric interactions between the fine polymer particles 30 and the substrate 36 are utilized to improve the close contact properties therebetween. In addition, the fine polymer particles 30 are impregnated by the water miscible organic solvent 32 and caused to swell. Thereby, the adsorption areas of the fine polymer particles 30 with respect to the substrate 36 are increased, and the close contact properties are improved further. In this method, the fine polymer particles 30 are swollen to larger particle sizes when they are adsorbed onto the substrate 36. Therefore, the particle density on the substrate 36 is decreased compared to cases in which the water miscible organic solvent 32 is not impregnated into the fine polymer particles 30, and this must be taken into consideration.

It is desirable to rinse excess fine polymer particles 30 off of the substrate 36 with the rinsing solvent after the fine polymer particles 30 are adsorbed onto the substrate 36 and the substrate 36 is drawn out of the dispersion liquid 31. If this process is not administered, the fine polymer particles 30 do not form a single particle layer, but regions will be created in which the fine polymer particles 30 are stacked atop each other. Water based solvents (distilled water, ultrapure water, and ion exchanged water, for example), organic solvents (alcohol and acetone, for example), and mixtures thereof may be employed as the rinsing solvent. From the viewpoint of handling properties and industrial properties, water based solvents are preferred.

### <Step H>

Residual solvent 33 (the rinsing solvent in the third embodiment) that remains on the surface of the substrate 36, on which the fine polymer particles 30 are adsorbed, is substituted with the organic solvent 35 having lower surface tension than the residual solvent 33, by immersing the substrate 36 in the organic solvent 35 in this step (Figure 8).

The substrate 36, on which the fine polymer particles 30 are adsorbed, has residual solvent 33 when it is drawn out of the dispersion liquid 31 or the rinsing solvent. Therefore, small menisci are formed among the fine polymer particles 30 when the substrate 36 is dried. The drying of the substrate causes the menisci to exert capillary forces onto the fine polymer particles, and a problem that the fine polymer particles become agglomerated will occur. Therefore, it is desirable for the substrate 36 to be immersed in the organic solvent 35 having lower surface tension than the residual 33 prior to the substrate 36 being dried, to substitute the residual solvent 33 with the organic solvent 35. Thereby, the medium that forms the menisci (the residual solvent 33) can be replaced by the organic solvent 35, which has lower surface tension, and the capillary force 37 which is a cause of secondary agglomeration can be reduced. This is particularly effective in cases that the area of the substrate 36 is great.

Solvents that have affinity with water are desirable for use as the organic solvent 35. In addition, solvents that dissolve the fine polymer particles 30 are not suitable. Accordingly, an alcohol having strong polarity, such as MeOH, may be used as the organic solvent 35 in the case that fine polystyrene particles are employed.

Meanwhile, in the case that step (G) is also executed, the following processes are administered prior to step (H). Note that in the case that the fine polymer particles 30 are softened by the water miscible organic solvent 32, it is not necessary to execute step (G).

### <Step G>

The fine polymer particles 30 are heated and softened in this step.

Any method may be used to heat the fine polymer particles 30, as long as it does not deteriorate the substrate 36 and softens the fine polymer particles 30 to a suitable degree. Examples of such methods include: heating the rinse solvent to be used during rinsing of the substrate 36; immersing the substrate 36 in the dispersion liquid 31, which is heated; and directly heating the substrate 36 with a hotplate or the like. The amount of time during which the substrate 36 is rinsed with the heated rinsing solvent may be set as appropriate, and is preferably within a range from one second to ten minutes, and more preferably within a range from ten seconds to one minute. It is desirable for the temperature at which the fine polymer particles 30 are heated to be a temperature at which the fine particles are appropriately softened such that they become fixed onto the substrate 36. The temperature at which the fine particles are heated may be appropriately set according to the material of the fine particles. For example, in the case that fine polymer particles 30 are employed, it is desirable for heating to be performed within a range from 30°C below to 30°C above the glass transition temperature of the polymer, and more preferably within a range from 10°C below to 10°C above the glass transition temperature. Further, in the case that the heating is performed during rinsing by the water based solvent, and taking production of organic semiconductors into consideration, the temperature at which the fine particles are heated is preferably within a range from 70°C to 100°C, and more preferably within a range from 80°C to 100°C. It is desirable for the substrate 36 to be cooled after heating to positively prevent agglomeration. The cooling may be performed by rinsing the substrate 36 with cool water (water cooled to a temperature below room temperature), for example.

### <Step D>

The ultimately remaining residual solvent 33' (the organic solvent 35 in the third embodiment) after the substitution of the residual solvent 33 in step (H) is dried in this step (Figure 9).

Any drying method may be employed. Such drying methods include: natural drying at room temperature; blow drying with compressed air; drying in a depressurized atmosphere; heating; and combinations of these methods. In the case that MeOH is employed in step (H), compressed air may be blown onto the substrate 36 to remove excess MeOH, then the substrate 36 may be dried in a depressurized atmosphere for three hours at room temperature, for example.

### <Step E>

The material comprising constituent atoms of the finely apertured thin metal film 34 to be formed are deposited in this step.

Thin film forming methods such as the sputtering method, the vapor deposition method, the plating method, a coating method using metallic colloids, or a spray method may be employed to deposit the material. The depositing method to be employed may be appropriately selected according to the material to be utilized. The thickness of the finely apertured thin metal film 24 to be used in the fluorescence sensor of the present invention can be set for each material to be utilized, from the viewpoints of shielding the excitation light beam and generation conditions for surface plasmon. A film thickness within a range from 20nm to 60nm is desirable. At the same time, from the viewpoint of removing the fine particles which are adsorbed onto the substrate, it is desirable for the thickness of the thin film to be less than or equal to the particle size of the fine particles, and more preferably less than or equal to half the particle size. Note that multilayered films can be formed by repeating the material deposition step a plurality of times.

### <Step F>

The fine polymer particles 30 are removed to form the fine apertures 34a in the thin film in this step (Figure 11).

Removal of the fine particles from the substrate by a submerged ultrasonic process may be considered. However, it is difficult to remove fine particles from the central portion of the substrate using this process. In addition, the fine particles become more difficult to remove as the film thickness of the thin film is greater. Therefore, this process is only effective when the film thickness of the thin film is sufficiently thin. It is possible to remove the fine particles even in cases that the film thickness is great, by exposing the substrate and the thin film to ultrasonic waves for a long amount of time. However, this is not preferable, because the deposited thin metal film may become damaged by prolonged exposure to the ultrasonic waves. In order to resolve these problems, it is desirable to remove the fine particles by a method that employs an adhesive sheet (refer to Japanese Unexamined Patent Publication Nos. 2005-079352, 2007-087974, and 2007-087976).

An adhesive sheet 42 constituted b a substrate 30 and an adhesive layer 41 is adhesively attached so as to contact the fine polymer particles 30 and/or the thin metal film 34 thereon (Figure 11B). The fine polymer particles 30 and the thin films 34 formed thereon become adhesively attached to the adhesive layer 41 and are removed, by peeling the adhesive sheet 42 off (Figure 11). In the third embodiment, the fine polymer particles 30 are densely provided on the substrate 36. Therefore, the adhesive sheet 42 is only adhesively attached to the upper portions of the fine particles, and does not become adhesively attached to the thin metal film 34 at the peripheries of the fine particles. Accordingly, the finely apertured thin metal film 34 having favorable fine apertures 34a can be easily produced.

The adhesive sheet 42 to be used to remove the fine particles is not particularly limited, and may be appropriately selected according to the shapes and particle sizes of the fine particles, as well as the material and film thickness of the thin metal film. Commercially available adhesive sheets may be employed, as long as they satisfy the following conditions. It is desirable for the surface of the adhesive layer 41 to be flat and smooth, so that only the fine particles are selectively and uniformly removed. It is desirable for the flatness and smoothness of the surface of the adhesive layer 41 to be to a degree such that no recesses or protrusions are present when visually inspected. In the case that the substrate 40 is embossed or is a material that has recesses and protrusions, such as crepe paper, the recesses and protrusions are reflected in the adhesive layer 41. Therefore, It is desirable for the flatness and smoothness of the surface of the substrate 40 to be to a degree such that no recesses or protrusions are present when visually inspected. In addition, it is desirable for the adhesive layer to have a suitable adhesive strength with respect to the thin filmmaterial on the fine particles. It is desirable for the adhesive strength of the adhesive layer to be within a range from 0.1N/cm to 5N/cm according to JIS Z-0237 values that indicate adhesive strength, and more preferably to be within a range from 0.3N/cm to 3N/cm.

The material of the substrate 40 is not particularly limited. Examples of the material of the substrate 40 include: polyvinyl chloride films; polyester films, white polyolefin films; acetate films; copolymers thereof; and blended polymers thereof. The material of the adhesive layer 41 is not particularly limited as long as they exhibit suitable adhesive strength and do not contaminate the thin film. Examples of such materials include: rubber adhesives; acrylic adhesives; and urethane adhesives. The thickness of the adhesive sheet 42 is not particularly limited, and may be appropriately selected according to flexibility (expandability, for example), and strength (tensile strength, for example). It is desirable for the thickness of the adhesive sheet 42 to be within a range from 10µm to 1mm, and more preferably to be within a range from 50µm to 300µm.

It is desirable not to contaminate the surface of the substrate 36 with toxic substances, such as ionized compounds, and fine particles during adhesive attachment and peeling of the adhesive sheet 42. A protective film which is used during back grinding of silicon semiconductors (refer to Japanese Unexamined Patent Publication No. 2004-091563) is a preferred example of the adhesive sheet 42.

It is desirable for bubbles to not be present between the adhesive sheet 42 and the substrate 36 during adhesive attachment of the adhesive sheet 42. In addition, it is desirable for a peeling method that positively removes the fine particles and does not damage the deposited thin film to be employed. For example, peeling may be performed at a slow speed while visual inspection is being carried out. Further, the pressure applied during adhesive attachment, the speeds at which adhesive attachment and peeling are performed, the angle between the substrate 36 and the adhesive sheet 42 during peeling (folded back 180°, or folded 90°) and the like may be controlled. A pressing device (a device having a weight within a range from 0.1kg to 5kg, such as a rubber roller having a smooth surface) may also be appropriately selected.

Alternatively, a roller having the surface of the substrate 40 of the adhesive sheet 42 wrapped therearound, or a roller having an adhesive surface may be employed.

As described above, the method for producing finely apertured thin metal films of the present invention enables stable production of a thin film having favorable close contact properties, and production of favorable uniform fine apertures. Further, by applying the finely apertured thin metal film produced by the method of the present invention to fluorometry, it becomes possible to realize a low cost fluorescence sensor which is capable of highly sensitive fluorescence detection that employs a simple optical system. Note that the method for producing the finely apertured thin metal film of the third embodiment employed metal as the material of the thin film. However, the present invention is not limited to this configuration, and other materials, such as semiconductor materials, dielectric materials, and polymer materials, may be employed as the material of the thin film.

## Claims

1. A fluorescence sensor, comprising
a light source (8), for emitting an excitation light beam (9);
a substrate (6) formed of a material that transmits the excitation light beam (9), provided at a position that receives the excitation light beam (9);
a detection section that includes a thin metal film (24), formed on a surface of substrate (6) other than the surface onto which the excitation light beam (9) is incident;
a sample supplying section, for supplying samples containing fluorescent labels (5) and detection target substances (2) such that the samples contact the detection section; and
a photodetector (10) for detecting fluorescence from the fluorescent labels (5); **characterized by**:
the thin metal film (24) being a finely apertured thin metal film with fine apertures (24a) having diameters less than or equal to the wavelength of the excitation light beam (9);
the fluorescence sensor being configured such that the excitation light beam (9) enters the interface (24b) between the substrate (6) and the finely apertured thin metal film (24) of the detection section;
the fluorescent labels (5) are excited by at least one of: near field light (23) generated at the fine apertures (24a) of the finely apertured thin metal film (24) and surface plasmon on the finely apertured thin metal film (24) induced by the near field light (23); and
the fluorescence emitted from the fluorescent labels (5) is detected by the photodetector (10).

2. A fluorescence sensor as defined in Claim 1, wherein:
a specific binding substance (3) is immobilized on the surface of the detection section.

3. A fluorescence sensor as defined in either one of Claim 1 and Claim 2, wherein:
a non flexible film (25) of a hydrophobic material is formed at a film thickness within a range of 10 to 100nm on the finely apertured metal film (24) of the detection section.

4. A fluorescence sensor as defined in Claim 3, wherein:
the non flexible film (25) is constituted by a polymer material.

5. A fluorescence sensor as defined in any one of Claims 1 through 4, wherein:
the diameters of the fine apertures (24a) are within a range from 5nm to 200nm.

6. A fluorescence sensor as defined in any one of Claims 1 through 5, wherein:
the percentage of open areas of the finely apertured thin metal film (24) is within a range of 5% to 50%.

7. A method for producing a finely apertured thin metal film (34) to be utilized in fluorescence sensors, comprising the steps of:
(A) preparing a substrate (36) having static electric charges on the surface thereof;
(B) producing a dispersion liquid (31) containing fine particles (30) which are charged with static electric charges of a polarity opposite the static electric charges of the substrate (36);
(C) immersing the substrate (36) in the dispersion liquid (31) to cause the fine particles (30) to be adsorbed onto the surface of the substrate (36);
(D) drying the surface of the substrate (36), onto which the fine particles (30) are adsorbed;
(E) depositing a metal material comprising constituent atoms of the finely apertured thin metal film (34) to be formed onto the surface of the substrate (36), onto which the fine particles (30) are adsorbed; and
(F) removing the fine particles (30), by adhesively attaching an adhesive sheet (42) onto the fine particles (30), which are adsorbed on the surface of the substrate (36), from above, then peeling the adhesive sheet (42) off;
steps (C), (D), (E), and (F) being executed in this order after steps (A) and (B) are executed.

8. A method for producing a finely apertured thin metal film (24) as defined in Claim 7, wherein:
the fine particles (30) are polymer particles.

9. A method for producing a finely apertured thin metal film (24) as defined in either one of Claim 7 and Claim 8, further comprising a step of:
(G) heating the fine particles (30), which are adsorbed onto the surface of the substrate (36), in a solvent; wherein
step (G) is executed between steps (C) and (D).

10. A method for producing a finely apertured thin metal film as defined in any one of Claim 7, Claim 8, and Claim 9, wherein:
the dispersion liquid (31) contains a water miscible organic solvent.

11. A method for producing a finely apertured thin metal film (24) as defined in any one of Claims 7 through 10, further comprising a step of:
(H) immersing the substrate (36), onto which the fine particles (30) are adsorbed, within an organic solvent (35) having lower surface tension than a residual solvent (33) , and substituting the residual solvent (33) with the organic solvent (35); wherein
step (H) is executed between steps (C) and (D).

12. A method for producing a finely apertured thin metal film as defined in any one of Claims 7 through 11, wherein:
the adhesive strength of the adhesive sheet (42) is within a range of 0.1N/cm to 5N/cm.
